**Europäisches Patentamt**

**European Patent Office**

**Office européen des brevets**

(19)

(11) Veröffentlichungsnummer : **0 051 847**
**B1**

(12) # EUROPÄISCHE PATENTSCHRIFT

(45) Veröffentlichungstag der Patentschrift :
25.07.84

(21) Anmeldenummer : 81109475.4

(22) Anmeldetag : 02.11.81

(51) Int. Cl.³ : **B 29 D  7/14**

(54) **Kalander mit mindestens einer eine Heizvorrichtung aufweisenden Walze.**

(30) Priorität : 10.11.80 CH 8311/80

(43) Veröffentlichungstag der Anmeldung :
19.05.82 Patentblatt 82/20

(45) Bekanntmachung des Hinweises auf die Patenterteilung : 25.07.84 Patentblatt 84/30

(84) Benannte Vertragsstaaten :
DE IT

(56) Entgegenhaltungen :
AT-B-   110 717
CH-A-   352 988
DE-B- 1 146 787
DE-B- 1 297 784
DE-C- 1 010 264
DE-C- 1 012 895
DE-U- 1 947 145
FR-A-   467 150
US-A- 2 912 556
Trocknungstechnik, z. Bd., K. Kröll, 2. Auflage, 1978, Springer Verlag Berlin, Heidelberg, New York, Seiten 382 bis 401

(73) Patentinhaber : **AG Ernest Fischer's Söhne**
**Bleicheweg**
**CH-5605 Dottikon (CH)**

(72) Erfinder : **Keller, Leo**
**Brünismattstrasse 5**
**CH-5610 Wohlen (CH)**

(74) Vertreter : **Riederer, Conrad A., Dr.**
**Bahnhofstrasse 10**
**CH-7310 Bad Ragaz (CH)**

Beschreibung

Die Erfindung betrifft einen Kalander mit mindestens einer heizbaren Walze, insbesondere zum Kalandrieren von Kunststoffen, z. B. Fluorthermoplasten, mit Erweichungstemperaturen über 300 °C, bei welcher Walze mindestens eine im Walzeninnern stationär in einem Abstand von der Innenwandung der Walze angeordnete Infrarotstrahlungsquelle vorgesehen ist, die sich entlang der Walzenachse erstreckt, wobei die Wandungsdicke über dem beheizten Teil der Walze keine grossen Unterschiede aufweist.

Die Kalandriertechnik hat in den Letzten Jahren einen grossen Aufschwung genommen. Durch Kalandrieren werden beispielsweise Folien und Bodenbeläge aus Thermoplasten hergestellt. Auch das Beschichten von Substraten mit Kunststoff erfolgt meist durch Kalandrieren.

Ein besonderes Problem beim Kalandrieren bildet die Beheizung der Walzen. Im Betrieb sollte die Walze einen geringen Temperaturgradienten von plus/minus 1 °C aufweisen. Sind grössere Unterschiede vorhanden, so wird dadurch die Qualität des durch Kalandrieren hergestellten Produktes ungünstig beeinflusst. Kopsch weist in seinem Werk « Kalandertechnik », Carl Hanser Verlag München/Wien, 1978, auf Seite 92 darauf hin, dass sich die Heizung mit einem flüssigen Heizmedium in den letzten Jahren sehr stark durchgesetzt hat, weil eine solche Heizung die Vorteile des guten Wärmeüberganges aufweist. Die Nachteile liegen aber darin, dass eine solche Heizung eine komplizierte Anlage mit hohen Investitionskosten erfordert und bei Verwendung von Wasser als Wärmeträger für Temperaturen von 220 °C Drücke von 32 bar auftreten, so dass die strengen Sicherheitsbestimmungen für Dampfkessel zur Anwendung kommen. Thermalöl als Wärmeträger bietet zwar den Vorteil eines niedrigeren Systemdrucks. Es muss jedoch wegen der niedrigeren spezifischen Wärme des Oels und der kleineren Wärmeübergangszahl von Oel auf Stahl die zwei- bis dreifache Menge an Oel fliessen, um die gleich Wärmemenge wie bei Wasser zu transportieren. Wie Kopsch weiter ausführt, treten bei der Verwendung eines flüssigen Heizmediums Verluste an antriebsleistung durch Reibung der Heizköpfe auf, welche das flüssige Medium in die drehende Walze einführen. Die Verwendung von Thermalöl hat noch den Nachteil, dass es wesentlich teurer als Wasser ist, zum Vercracken neigt und brennbar ist. Bei der Verwendung von Thermalöl sind Temperaturen an der Walzenoberfläche bis 300 °C erreichbar, was gegenüber einer Temperatur von 215° bis 220 °C bei Druckwasser von Vorteil ist.

Die Anwendung von höheren Temperaturen als 300 °C ist nicht bekannt. Es sind zwar in den letzten Jahren Thermalöle bekannt geworden, die auch höhere Temperaturen erlauben würden. Diese Thermalöle haben jedoch den Nachteil, dass sie bei Temperaturen unter 100 °C in einen festen Zustand übergehen.

Die deutsche Auslegeschrift 1 297 784 zeigt eine Walze, bei der sogenannte Backerstäbe in zwei konzentrischen Zylinderflächen im Innern der Walze angeordnet sind und über Schleifringe mit Strom versorgt werden. Bei den sogenannten Backerstäben handelt es sich um Nickelrohre, in welchen die Wärmequelle in Magnesiumpulver eingebettet ist. Die kurzwellige Strahlung wird somit im Stab selbst in eine langwellige Strahlung umgewandelt. Mit dieser Anordnung lassen sich die gewünschten hohen Temperaturen nicht erzielen. Da die Backerstäbe mitdrehen, ist keine gleichmässige Erwärmung der Walze gewährleistet.

In der deutschen Auslegeschrift 1 146 787 wird ausdrücklich darauf hingewiesen, dass es erfahrungsgemäss ziemlich schwierig ist, eine über die ganze Walzenlänge gleichmässige Temperatur zu erzielen und einzuhalten. Es wird auch erwähnt, dass versucht wurde, diese Schwierigkeiten dadurch zu beheben, dass ein Verteilmedium in Form einer heissen Flüssigkeit verwendet wird. Die Auslegeschrift selbst schlägt vor, ein dünnwandiges Futter aus Kupfer zu verwenden, um eine gleichmässige Wärmeverteilung zu übernehmen. Des weiteren sieht sie einen im langwelligen Infrarotbereich arbeitenden Heizstab vor, wobei ausdrücklich erwähnt wird, dass dieser Heizstab entweder feststehend angebracht sein kann oder mit der Walze umlaufen kann, in welchem Falle die Stromzuführung über Schleifringe geschieht.

In der Literaturstelle « Trocknungstechnik », zweiter Band, K. Kröll, 2. Auflage, 1978, Springer Verlag, Berlin, Heidelberg, New York, Seite 386, wird ein stabförmiger Quarzrohr-Hochtemperaturstrahler beschrieben, der Strahlen im kurzwelligen Infrarotbereich abgibt. Die Literaturstelle gibt jedoch keine Hinweise zur Verwendung solcher Quarzrohrstrahler bei Kalanderwalzen.

Da Fluorthermoplaste Erweichungstemperaturen von über 300 °C aufweisen, besteht seit Langem ein Bedürfnis für einen Kalander, der auch solche Kunststoffe mit genügenden Bahngeschwindigkeiten verarbeiten kann. Bemühungen in dieser Hinsicht sind bis jetzt jedoch erfolglos geblieben. Es ist daher Aufgabe der vorliegenden Erfindung einen Kalander zu schaffen, der sich insbesondere zum Kalandrieren von Kunststoffen, z. B. Fluorthermoplasten, mit Erweichungstemperaturen von über 300 °C eignet.

Gemäss der Erfindung wird dies dadurch erreicht, dass die Infrarotstrahlungsquelle im mittel- und kurzwelligen Infrarotbereich arbeitet, dass der Abstand der Infrarotstrahlungsquelle von der Innenwandung mindestens 5 cm beträgt und dass die Wandungsdicke der Walze mindestens 3 cm beträgt. Im mittel- und kurzwelligen Infrarotstrahlungsbereich wird die Strahlungsenergie von der Innenwandung der Walze sehr gut absorbiert. Deshalb lassen sich mit einer solchen, im Walzeninnern stationär angeordneten Infrarotstrahlungsquelle Walzentemperaturen von bis zu 420 °C und darüber erzielen, welche sich sehr gut zur Verarbeitung von Fluorthermoplasten eignen. Versuche haben gezeigt, dass bei einer Temperatur von 420 °C die Beschichtung eines Substrats mit Fluorthermoplasten ohne Schwierigkeiten durchgeführt werden kann.

Da die Infrarotstrahlungsquelle in einem relativ grossen Abstand von der Innenwandung der Walze angeordnet ist, wird eine gleichmässige Erwärmung der Walze erreicht, auch wenn die Infrarotstrahlungsquelle einzelne heisse Flecken aufweist, die mehr Energie abstrahlen. Diese heissen Flecken können sich bei der Einhaltung eines genügenden Abstandes nicht ungünstig auswirken, da die Strahlungsenergie mit der dritten Potenz des Abstandes von der Ausstrahlungsquelle abnimmt. Da die Wandungsdicke der Walze relativ gross ist, wird eine gute Wärmeverteilung bewirkt, so dass der Temperaturgradient an der Walzenoberfläche klein gehalten wird.

Von Vorteil ist natürlich auch, wenn die Wandungsdicke über dem beheizten Teil der Walze keine grossen Unterschiede aufweist, so dass keine Wärmestauungen entstehen. Es wird daher auch vorteilhaft vorgesehen, dass die Walze ausgekammert ist und dass an den Enden der Walze der Uebergang von der Auskammerung zur Bohrung praktisch kontinuierlich erfolgt.

Wie wichtig eine gleichmässige Erwärmung der Walze ist, ergibt sich bereits aus dem von Kopsch (Seite 82) erwähnten Umstand, dass bei einem Wärmeausdehnungskoeffizienten von 10 bis $12 \cdot 10^{-6}$ $K^{-1}$ ein Grad Temperaturdifferenz immerhin eine Durchmesseränderung von etwa 10 µm je Meter Walzendurchmesser bewirkt. Dadurch könnte ein für die Kalandrierung der Folie unbrauchbares Walzenprofil erzeugt werden. Es ist dabei zu bedenken, dass bei einer Folie von 0,1 mm Dicke ein durch eine ungleichmässige Aufheizung der Walze erzeugter Dickenunterschied von 0,01 mm bereits zu einem Materialmehrverbrauch von 10 % führt. Der nicht durch Temperaturunterschiede gestörten Walzengenauigkeit kommt daher eine sehr grosse Bedeutung zu, ganz abgesehen davon, dass für gewisse Produkte die genaue Einhaltung der Folien- oder Schichtdicke für die Qualität des Produktes entscheidend ist.

Zweckmässigerweise ist die Infrarotstrahlungsquelle stabförmig und erstreckt sich der stabförmige Infrarotstrahler über die ganze Ballenbreite der Walze und noch etwas darüber hinaus. Dies ermöglicht eine gleichmässige Erwärmung der Walze und zwar auch im Bereich der Walzenränder. Gegebenenfalls kann zusätzlich noch auf beiden Seiten der Walze mindestens ein Infrarotstrahler angeordnet werden, der sich nur über einen Bruchteil der Walzenlänge erstreckt und als Rand-Zusatzheizung dient. Durch diese Zusatzheizung kann ein unerwünschter Temperaturgradient an den Walzenrändern vermieden werden. Um eine Justierung zu ermöglichen, sind die Infrarotstrahler der Zusatzheizung axial verschiebbar auf dem Trägerstab angeordnet.

Die Infrarotstrahler bestehen vorteilhaft je aus einem in einem Quarzrohr untergebrachten elektrischen Glühdraht. Die Verwendung eines Quarzrohres hat den Vorteil, dass die vom Glühdraht erzeugte kurzwellige Infrarotprimärstrahlung nicht beim Durchgang durch das Glas in eine langwelligere Sekundärstrahlung umgewandelt wird. Es erweist sich ferner als zweckmässig, dass der Infrarotstrahler zusätzlich zum Glühdraht noch einen Reflektor aufweist, welcher die auf ihn fallende Infrarotstrahlung gegen die Innenwandung der Walze reflektiert. Dadurch wird dafür gesorgt, dass die Strahlung dorthin gelenkt wird, wo eine Wärmeerzeugung erwünscht ist. Gleichzeitig wird dadurch eine unerwünscht hohe Aufheizung des Trägerstabes vermieden.

Um Wärmeverluste an den Walzenenden zu vermeiden, können diese durch Abschirmungsteller abgeschlossen sein. Diese Teller können entweder am Rahmen des Kalanders oder an der Walze befestigt sein.

Im Innern der Walze, ungefähr in der Mitte der Ballenlänge, ist vorteilhaft ein Temperaturfühler angeordnet. Er erlaubt die Steuerung der Aufheizung der Walze. Von Vorteil ist es, wenn der Temperaturfühler im Innern des als Rohr ausgebildeten Trägerstabes angeordnet ist. Die Steuerleitungen zum Temperaturfühler können dann relativ geschützt im Innern des Trägerstabes aus der Walze herausgeführt werden.

Es kann ein an dem oder die Temperaturfühler angeschlossene Steuervorrichtung vorgesehen sein, um die Aufheizgeschwindigkeit und die Betriebstemperatur durch Steuerung der der Infrarotstrahlungsquelle zugeführten Energie zu regeln. Es ist bekannt, dass die Regelung der Aufheizungsgeschwindigkeit von grosser Bedeutung ist. Kalanderwalzen sind nämlich empfindlich gegen schroffe Temperaturwechsel. Besonders neue Walzen sollten im Anfang nur sehr langsam aufgeheizt und abgekühlt werden, um Restspannungen im Material zum Abklingen zu bringen. Nach etwa halbjährigem Betrieb kann dann die Heiz- und Abkühlgeschwindigkeit bis auf etwa 2 °C pro Minute gesteigert werden.

Von besonderer Bedeutung ist die genaue Einhaltung der Betriebstemperatur. Infolge der Masse der Walze hinkt die Aussentemperatur etwas hinter der Innentemperatur nach. Es ist daher zweckmässig, am Ende des Aufheizvorgangs die Aufheizgeschwindigkeit zu verlangsamen, um ein Ueberschiessen zu vermeiden. Die Steuervorrichtung ist daher vorteilhaft so ausgebildet, dass am Ende des Aufheizvorgangs eine Feinregelung stattfindet.

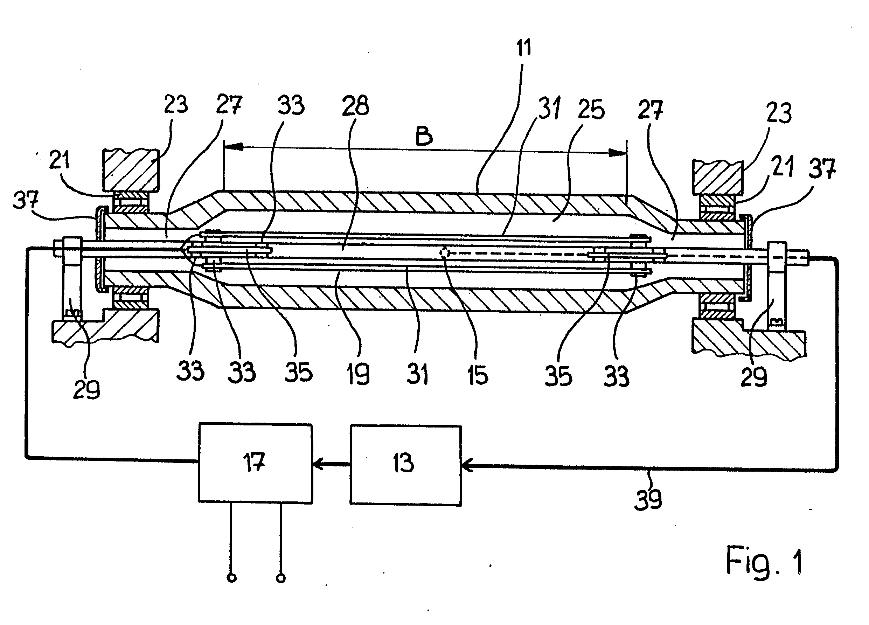

Ein Ausführungsbeispiel der Erfindung wird nun unter Bezugnahme auf die Zeichnung beschrieben.

Die Zeichnung zeigt in schematischer Darstellung einen Schnitt durch eine Walze 11 eines Kalanders, wobei schematisch auch eine Steuervorrichtung 13 dargestellt ist, welche in Abhängigkeit eines Temperaturfühlers 15 eine Regeleinrichtung 17 betätigt, um die Zufuhr der Energie zur Infrarotstrahlungsquelle 19 zu regeln.

Die Walze 11 ist in üblicher Weise auf beiden Seiten durch die Lager 21 im Kalanderrahmen 23 drehbar gelagert. Da die Walze 11 für Betriebstemperaturen im Bereich von 420 °C vorgesehen ist, besteht sie aus einem für Kalanderwalzen hoher Güte entwickelten Walzenlegierung von grosser Isotropie. Wie bereits einleitend erwähnt wurde, ist es ja wichtig, dass sich die Walze gleichmässig erwärmt und die Wärmeausdehnung ebenfalls möglichst gleichmässig ist. Dadurch wird bewirkt, dass die Walze auch bei Betriebstemperatur ein gutes Walzenprofil und einen guten Rundlauf aufweist.

Die Wandungsdicke der Walze ist relativ gross, indem sie mindestens drei Zentimeter beträgt. Wenigstens im beheizten Teil weist die Walze keine grossen Unterschiede der Wandungsdicke auf. Die Walze 11 ist ausgekammert, wobei an den Enden der Walze der Uebergang von der Auskammerung 25 zur Bohrung 27 praktisch kontinuierlich erfolgt. All dies ist für eine gute Wärmeverteilung von Bedeutung und bewirkt, dass der Temperaturgradient an der Walzenoberfläche wenigstens im Bereich der sogenannten Ballenbreite B klein gehalten wird.

Die Infrarotstrahlungsquelle 19 arbeitet in mittel- und kurzwelligen Infrarotbereich. Sie besteht aus einem Trägerstab 28, der von zwei am Kalanderrahmen 23 gehaltenen Supporten 29 getragen wird und an dem stabförmige Infrarotstrahler 31 angeordnet sind. Beim gezeigten Ausführungsbeispiel besteht der Trägerstab 28 aus einem Vierkantrohr, wobei an drei Seiten des Vierkantrohrs mittels je eines Paares von Haltern 33 ein Infrarotstrahler 31 angeordnet ist, der sich über die ganze Ballenbreite der Walze 11 und noch etwas darüber hinaus erstreckt. Auf der vierten Seite des Vierkantrohrs 28 sind zwei Infrarotstrahler 35 ebenfalls mit Klammern 33 angeordnet. Diese Infrarotstrahler 35 erstrecken sich jedoch nur über einen Bruchteil der Walzenlänge und dienen als Rand-Zusatzheizung. Die Infrarotstrahler 35 der Zusatzheizung sind axial verschiebbar auf dem Trägerstab 28 angeordnet, um eine Justage in Axialrichtung zu ermöglichen. Mit dieser Zusatzheizung 35 kann der Randbereich der Walze 11 zusätzlich aufgeheizt werden, um einen unerwünschten Temperaturabfall am Rand der Walze zu vermeiden.

Wenn auch verschiedene Arten von Infrarotstrahlern, z. B. auch gasbeheizte, denkbar sind, haben sich für hohe Temperaturen Infrarotstrahler als zweckmässig erwiesen, die einen in einem Quarzrohr untergebrachten elektrischen Glühdraht enthalten. Zusätzlich zum Glühdraht ist noch ein Reflektor vorgesehen, so dass durch geeignete Anordnung der Lampe die auf den Reflektor auffallende Infrarotstrahlung ebenfalls gegen die Innenwandung der Walze 11 reflektiert werden kann. Um Wärmeverluste zu vermeiden, sind die Walzenenden durch Abschirmungsteller 37 abgeschlossen. Beim gezeigten Ausführungsbeispiel sitzen die Abschirmungsteller 37 auf dem Trägerstab 28, wobei ein schmaler Spalt zwischen dem Abschirmungsteller und der Walze besteht. Es wäre aber auch möglich, den Abschirmungsteller 37 an der Walze 11 anzubringen, so dass er sich zusammen mit der Walze dreht.

Der Temperaturfühler 15 im Innern des Trägerstabes 28 ist über eine Leitung 39 mit der schematisch dargestellten Steuervorrichtung 13 verbunden, um die Aufheizgeschwindigkeit und die Betriebstemperatur durch Steuerung der der Infrarotstrahlungsquelle 19 zugeführten Energie zu regeln. Die Steuervorrichtung 13 kann die Schalteinrichtung 17 so betätigen, dass die Stromzufuhr zur Infrarotstrahlungsquelle geregelt wird.

Ausser oder anstelle des Temperaturfühlers im Innern der Walze ist es auch möglich, noch einen oder mehrere Temperaturfühler vorzusehen, welche die Aussentemperatur der Walze messen.

Die beschriebene Ausbildung eignet sich für alle Walzen in einer Kalanderanlage, die einer Heizung bedürfen, z. B. für die Vorheizwalze, die Hauptwalze, die Streck- oder Reckwalze usw. Von besonderem Interesse ist die Verarbeitung von Kunststoffen bei hohen Temperaturen, z. B. in der Grössenordnung von 420 °C. Bei diesen Temperaturen können auch Fluorthermoplaste, z. B. Tetraflorähtylen oder Monochlortrifluoräthylen, verarbeitet werden. Die Verarbeitung der Fluorthermoplaste ist von besonderem Interesse, da sie wegen ihrer hervorragenden Beständigkeit gegen Chemikalien und ihrer hohen Wärmefestigkeit viele Anwendungen haben. Wegen ihrer Unlöslichkeit und ihrer hohen Erweichungswärme eigneten sie sich bisher nicht gut für eine Verarbeitung durch Kalandrieren.

Bei der Inbetriebnahme des Kalanders wird die Walze in Umdrehung versetzt und mit einer Geschwindigkeit von nicht mehr als 2 °C pro Minute auf die gewünschte Betriebstemperatur, z. B. 420 °C, gebracht. Die Aufheizgeschwindigkeit wird durch den Temperaturfühler 15 und die Steuervorrichtung 13 geregelt, indem letztere über die Schaltvorrichtung 17 die Zufuhr an elektrischer Energie zur Infrarotstrahlungsquelle 19 regelt. Die insbesondere im mittel- und kurzwelligen Infrarotbereich liegende Strahlung der Infrarotstrahler 33, 35 heizt die Innenwandung dr Walze 11 auf, wobei die Wärme infolge der weitgehend gleichmässigen Bestrahlung der Innenwandung der Walze und der isotropen Natur des Walzenmaterials sich über die gesamte Ballenlänge B der Walze verteilt, so dass die Oberflächentemperatur sehr gleichmässig ist.

## Ansprüche

1. Kalander mit mindestens einer heizbaren Walze (11), insbesondere zum Kalandrieren von Kunststoffen, z. B. Fluorthermoplasten, mit Erweichungstemperaturen über 300 °C, bei welcher Walze (11) mindestens eine im Walzeninnern stationär in einem Abstand von der Innenwandung der Walze angeordnete Infrarotstrahlungsquelle vorgesehen ist, die sich entlang der Walzenachse erstreckt, wobei die Wandungsdicke über dem beheizten Teil der Walze (11) keine grossen Unterschiede aufweist, dadurch gekennzeichnet, dass die Infrarotstrahlungsquelle (19) im mittel- und kurzwelligen Infrarotbereich arbeitet, dass der Abstand der Infrarotstrahlungsquelle (19) von der Innenwandung mindestens 5 cm beträgt und dass die Wandungsdicke der Walze (11) mindestens 3 cm beträgt.

2. Kalander nach Anspruch 2, dadurch gekennzeichnet, dass die Walze (11) ausgekammert (25) ist und dass an den Enden der Walze der Uebergang von der Auskammerung (25) zur Bohrung (27) praktisch kontinuierlich erfolgt.

3. Kalander nach Anspruch 1 oder 2, dadurch gekennzeichnet, dass die Infrarotstrahlungsquelle stabförmig ist und sich über die ganze Ballenbreite (B) der Walze (11) und noch etwas darüber hinaus erstreckt.

4. Kalander nach Anspruch 3, dadurch gekennzeichnet, dass zusätzlich noch auf beiden Seiten der Walze (11) mindestens je ein weiterer Infrarotstrahler (35), der sich nur über einen Bruchteil der Walzenlänge erstreckt, als Rand-Zusatzheizung vorgesehen ist.

5. Kalander nach Anspruch 4, dadurch gekennzeichnet, dass die weiteren Infrarotstrahler (35) axial verschiebbar auf dem Trägerstab (28) angeordnet sind.

6. Kalander nach einem der Ansprüche 1 bis 5, dadurch gekennzeichnet, dass die Infrarotstrahler (32, 35) je aus einem in einem Quarzrohr untergebrachten elektrischen Glühdraht gebildet werden.

7. Kalander nach Anspruch 6, dadurch gekennzeichnet, dass der Infrarotstrahler (31, 35) zusätzlich zum Glühdraht noch einen Reflektor aufweist, welcher die auf ihn fallende Infrarotstrahlung gegen die Innenwandung der Walze (11) reflektiert.

8. Kalander nach einem der Ansprüche 1 bis 7, dadurch gekennzeichnet, dass die Walzenenden durch Abschirmungsteller (37) abgeschlossen sind.

9. Kalander nach einem der Ansprüche 1 bis 8, dadurch gekennzeichnet, dass im Innern der Walze ungefähr in der Mitte der Ballenlänge ein Temperaturfühler (15) angeordnet ist.

10. Kalander nach Anspruch 9, dadurch gekennzeichnet, dass der Temperaturfühler (15) im Innern eines als Rohr ausgebildeten Trägerstabes (28) angeordnet ist.

11. Kalander nach Anspruch 9 oder 10, dadurch gekennzeichnet, dass ein an dem oder die Temperaturfühler (15) angeschlossene Steuervorrichtung (13) vorgesehen ist, um die Aufheizgeschwindigkeit und die Betriebstemperatur durch Steuerung der der Infrarotstrahlungsquelle (19) zugeführten Energie zu regeln.

12. Kalander nach Anspruch 11, dadurch gekennzeichnet, dass die Steuervorrichtung (13) derart ausgebildet ist, dass am Ende des Aufheizvorgangs eine Feinregelung stattfindet.

### Claims

1. Calender with at least one heatable roller (11), particularly for calendering plastic materials, e. g. fluorothermoplastics having a softening temperature above 300 centigrades, said roller (11) being associated by a infrared radiation source located stationary inside of said roller at a distance from the inner wall thereof and extending substantially along the roller axis, the wall thickness of said roller having no substantial differences in the heated part of said roller, characterized in that the infrared radiation source operates in the medium- and shortware infrared region, in that the distance from the wall is at least 5 cm and in that the thickness of the wall of the roller (11) is at least 3 centimeters.

2. Calender according to claim 1, characterized in that the roller (11) is hollowed out (25) and that at the ends of the roller the transition from the hollowed out portion (25) to the bore (27) is practically continuously.

3. Calender according to claim 1 or 2, characterized in that the infrared source is rodlike and extends over the whole effective length (B) of the roller (11) and somewhat beyond said length.

4. Calender according to claim 3, characterized in that on both sides of the roller (11) at least one additional infrared radiator (35) extending only over a fraction of the roller length is provided as additional lateral heating.

5. Calender according to claim 4, characterized in that said additional infrared radiators (35) are located axially adjustable on the carrier rod (28).

6. Calender according to one of the claims 1 to 13, characterized in that the infrared radiators (31, 35) are formed by an electric filament located in a quartz tube.

7. Calender according to claim 6, characterized in that the infrared radiator (31, 35) comprises in addition to the filament a reflector reflecting the infrared radiation falling on it against the inner wall of the roller (11).

8. Calender according to one of the claims 1 to 7, characterized in that the ends of the roller are closed by shield disks (37).

9. Calender according to one of the claims 1 to 8, characterized in that a temperature sensor (15) is located inside of the roller approximately in the middle of the roller length.

10. Calender according to claim 9, characterized in that the temperature sensor (15) is located in the inside of the carrier rod (28) formed by a tube.

11. Calender according to claim 9 or 10, characterized in that a control device (13) connected to the temperature sensor or temperature sensors (15) is provided to control the rate of heating up and the operating temperature by controlling the energy fed to the infrared radiation source (19).

12. Calender according to claim 11, characterized in that the control device (13) is so designed that it causes at the end of the heating-up a fine adjustment of the temperature.

## Revendications

1. Calandre avec au moins un rouleau chauffable (11) destinée en particulier à calandrer des matières plastiques, par exemple des fluorures thermoplastiques, avec des températures d'amollisement au-dessus de 300°, le rouleau étant pourvu au moins d'un émetteur de rayonnement infrarouge qui s'étend le long de l'axe du rouleau en position stationnaire à distance de la paroi intérieur, l'épaisseur de la paroi au-dessus de la partie chauffée du rouleau (11) n'ayant pas de grandes différences, caractérisée en ce que l'émetteur du rayonnement infrarouge (19) fonctionne dans la zone infrarouge des ondes moyennes et courtes, en ce que la distance de l'émetteur du rayonnement infrarouge (19) de la paroi intérieure est au moins de 5 cm et que l'épaisseur du rouleau (11) est au moins de 3 cm.

2. Calandre selon la revendication 2, caractérisée en ce que le rouleau (11) est muni d'un espace d'air (25) et que la transition de l'espace d'air (25) à l'alésage (27) se fait pratiquement continuellement.

3. Calandre selon la revendication 1 ou 2, caractérisée en ce que l'émetteur du rayonnement infrarouge est prévu en forme de barre et s'étend sur toute la largeur du corps (B) du rouleau (11) et encore un peu plus loin.

4. Calandre selon la revendication 3, caractérisée en ce que sur les deux côtés du rouleau (11) est prévu au moins toujours un autre émetteur du rayonnement infrarouge (35) comme chauffage supplémentaire, qui ne s'étend que sur une partie de la longueur du rouleau.

5. Calandre selon la revendication 4, caractérisée en ce que les émetteurs du rayonnement supplémentaires (35) situés sur la barre porteur (28) peuvent être déplacés au sens de l'axe.

6. Calandre selon une des revendications 1-5, caractérisée en ce que les émetteurs du rayonnement (32, 35) sont formés de toujours un filament chauffant situé dans un tube en quartz.

7. Calandre selon la revendication 6, caractérisée en ce que l'émetteur du rayonnement infrarouge (31, 35) est muni en plus du filament chauffant d'un réflecteur qui réflète le rayonnement infrarouge incombant sur la paroi intérieure du rouleau (11).

8. Calandre selon une des revendications 1-7, caractérisée en ce que les bouts du rouleau sont formés par des disques servant d'écran (37).

9. Calandre selon une des revendications 1-9, caractérisée en ce qu'à l'intérieur du rouleau à epu près au milieu de la longueur du corps du rouleau est placé un palpeur de température (15).

10. Calandre selon la revendication 9, caractérisée en ce que le palpeur de température (15) est situé à l'intérieur d'une barre porteur (28) en forme de tube.

11. Calandre selon la revendication 9 ou 10, caractérisée en ce qu'est prévu un dispositif de manœuvre (13) raccordé au (ou aux) palpeur de température (15) en vue de régler le temps d'échauffement et la température de service par le contrôle de l'énergie alimentant l'émetteur du rayonnement infrarouge (19).

12. Calandre selon la revendication 11, caractérisée en ce que le dispositif de contrôle (13) est conçu de sorte qu'il met en marche un réglage de précision à la fin du procédé d'échauffement.

Fig. 1